# EUROPÄISCHE PATENTSCHRIFT

(11) **EP 2 490 579 B1**
(45) Veröffentlichungstag und Bekanntmachung des Hinweises auf die Patenterteilung: **26.03.2014**
(21) Anmeldenummer: 10776552.1
(22) Anmeldetag: 19.10.2010
(51) Int. Cl.: A47J 31/36

(54) **BRÜHVORRICHTUNG UND VERFAHREN ZUM EXTRAHIEREN EINER PORTIONSKAPSEL**
BREWING DEVICE AND METHOD FOR EXTRACTING A PORTION CAPSULE
DISPOSITIF DE PERCOLATION ET PROCÉDÉ PERMETTANT L'EXTRACTION D'UNE CAPSULE MONODOSE

(30) Priorität: 19.10.2009 DE 102009049945; 19.10.2009 US 252873 P
(43) Veröffentlichungstag der Anmeldung: 29.08.2012
(73) Patentinhaber: Eugster/Frismag AG Elektrohaushaltgeräte, 8580 Amriswil (CH)
(72) Erfinder: KRÜGER, Marc, 51467 Bergisch-Gladbach (DE)
(74) Vertreter: Loock, Jan Pieter
(86) Internationale Anmeldenummer: PCT/EP2010/006349
(87) Internationale Veröffentlichungsnummer: WO 2011/047815

(56) Entgegenhaltungen:
- EP-A1- 1 495 702
- EP-A1- 2 077 087

## Beschreibung

Die vorliegende Erfindung betrifft eine Brühvorrichtung zum Extrahieren einer Portionskapsel mit einem einen Hohlraum für die Portionskapsel aufweisenden Aufnahmeelement und einem Verschlusselement, wobei das Verschlusselement zwischen einer von dem Aufnahmeelement beabstandeten Ladestellung und einer den Hohlraum verschließenden Extraktionsstellung bewegbar ist und wobei die Brühvorrichtung ein Halteelement zur Halterung der Portionskapsel in der Ladestellung aufweist.

Solche Brühvorrichtungen sind allgemein bekannt. Beispielsweise ist aus der Druckschrift EP 2 077 087 A1 eine Brühvorrichtung für eine Portionskapsel mit einem automatischen Auswurfmechanismus bekannt. Die Brühvorrichtung umfasst dabei ein Aufnahmeelement mit einem Hohlraum zur Aufnahme der Portionskapsel und ein Verschlusselement zum Verschließen des Hohlraums. Das Verschlusselement umfasst dabei eine Injektionsanordnung zur Injektion von Extraktionsflüssigkeit in die Portionskapsel, während das Aufnahmeelement eine Extraktionsanordnung umfasst, um die mit einer in der Portionskapsel angeordneten Getränkesubstanz wechselwirkende Extraktionsflüssigkeit aus der Portionskapsel abzuführen und zur Bereitstellung eines Getränks einem Gefäß zuzuführen. Zur Befüllung der Brühvorrichtung mit der Portionskapsel wird das Verschlusselement in eine Ladestellung überführt, in der es von dem Aufnahmeelement beabstandet ist. Anschließend wird die Portionskapsel in einen Zwischenraum zwischen dem Aufnahmeelement und dem Verschlusselement eingeführt, wobei die Portionskapsel dabei von zwei seitlich am Verschlusselement angeordneten Seitenarmen aufgenommen und gehalten wird. Dabei hintergreifen zwei L-förmig ausgebildete Endabschnitte der Seitenarme einen Flansch der Portionskapsel. Anschließend wird das Verschlusselement in Richtung des Aufnahmeelements verschoben und die Portionskapsel in den Hohlraum des Aufnahmeelements eingeführt. Die Seitenarme sind dabei über vorspringende Stifte jeweils in zwei seitlich angeordneten geradlinigen Führungsbahnen derart zwangsgeführt, dass durch die Bewegung des Verschlusselements in Richtung des Aufnahmeelements die L-förmigen Endabschnitte erst kurz vor dem vollständigen Einführen der Portionskapsel in den Hohlraum des Aufnahmeelements auseinanderschwenken und den Flansch der Portionskapsel von den L-förmigen Endabschnitten freigegeben wird. Beim Zurückfahren des Verschlusselements werden die Stifte jeweils in zwei seitlich angeordneten und gebogenen Führungsbahnen geführt, so dass die L-förmigen Endabschnitte voneinander beabstandet bleiben und sich erst kurz vor dem Erreichen der Ladestellung wieder annähern. Dies führt dazu, dass beim Zurückfahren des Verschlusselements die Portionskapsel nicht in Eingriff mit den L-förmigen Endabschnitten gelangt und daher unter Einwirkung der Schwerkraft in einen unterhalb der Brühkammer angeordneten Auffangbehälter fällt. Die Seitenarme durchlaufen bei der Hin- und Zurückbewegung des Verschlusselements relativ zum Aufnahmeelement folglich eine Art Hysterese. Nachteilig an dieser Brühvorrichtung ist, dass die Portionskapsel vor dem Einführen in den Hohlraum des Aufnahmeelements nicht in Richtung des Aufnahmeelements ausgerichtet wird. Hierdurch besteht die Gefahr, dass die Portionskapsel beim Schließen der Brühkammer mit dem Kapselboden gegen den Rand des Aufnahmeelements stößt und somit ein korrektes Schließen der Brühkammer nicht möglich ist. Um diese Gefahr zu reduzieren, muss der zum Aufnehmen des Flansches ausgebildeten Zwischenraum zwischen den Endabschnitten und dem Verschlusselement vergleichsweise schmal sein, damit die Portionskapsel keine oder nur eine geringfügige Neigung gegenüber der Bewegungsrichtung des Verschlusselements aufweist. Dies erfordert aber in nachteiligerweise eine vergleichsweise präzise und somit schwierige Einführung der Portionskapsel beim Beladen der Brühvorrichtung

Der Erfindung liegt daher die Aufgabe zu Grunde, eine Brühvorrichtung und ein Verfahren zum Extrahieren einer Portionskapsel bereitzustellen, die bzw. das die Nachteile des Standes der Technik nicht aufweist und somit eine deutlich sicherere und komfortablere Befüllung der Brühvorrichtung mit Portionskapseln gewährleistet. Gleichzeitig ist die Brühvorrichtung vergleichsweise kostengünstig herstellbar, einfach zu montieren und universell einsetzbar.

Diese Aufgabe wird erfindungsgemäß durch eine Brühvorrichtung wie in Anspruch 1 definiert, zum Extrahieren einer Portionskapsel mit einem einen Hohlraum für die Portionskapsel aufweisenden Aufnahmeelement und einem Verschlusselement gelöst, wobei das Verschlusselement zwischen einer von dem Aufnahmeelement beabstandeten Ladestellung und einer den Hohlraum verschließenden Extraktionsstellung bewegbar ist und wobei die Brühvorrichtung ein Halteelement zur Halterung der Portionskapsel in der Ladestellung aufweist und wobei ferner das Halteelement derart ausgebildet ist, dass durch die Bewegung des Verschlusselements von der Ladestellung in die Extraktionsstellung eine Ausrichtung der Portionskapsel im Wesentlichen in Richtung des Aufnahmeelements durch das Halteelement erfolgt.

In vorteilhafter Weise wird somit die Gefahr eines Anstoßens der Portionskapsel an den Rand des Aufnahmeelements beim Einführen der Portionskapsel in den Hohlraum des Aufnahmeelements wirksam verhindert, so dass einerseits die Formgebung des Aufnahmeelements genauer an den Außenumfang der Portionskapsel anpassbar ist, wodurch eine höhere Dichtheit der Brühkammer während des Brühvorgangs erzielt wird, und andererseits in der Ladestellung keine Ausrichtung der Portionskapsel beim Befüllen der Brühkammer mit der Portionskapsel notwendig ist. Die Handhabung der Brühvorrichtung ist im Vergleich zum Stand der Technik somit deutlich einfacher, wobei gleichzeitig die Fehleranfälligkeit der Brühkammer reduziert wird. Die in der Portionskapsel angeordnete Getränkesubstanz umfasst insbesondere ein Kaffeepulver, Schokoladenpulver, Milchpulver oder dergleichen. Die Brühvorrichtung umfasst vorzugsweise eine Kaffeemaschine.

Vorteilhafte Ausgestaltungen und Weiterbildung der Erfindung sind den Unteransprüchen, sowie der Beschreibung unter Bezugnahme auf die Zeichnungen zu entnehmen.

Gemäß einer bevorzugten Weiterbildung ist vorgesehen, dass das Halteelement relativ zum Verschlusselement zumindest über eine Teilstrecke bewegbar ausgebildet ist, wobei die Ausrichtung der Portionskapsel durch eine Relativbewegung zwischen dem Halteelement und dem Verschlusselement erfolgt. In vorteilhafter Weise ist in der Ladestellung das Halteelement maximal in Richtung Aufnahmeelement gegenüber dem Verschlusselement verschoben, so dass die Befüllung der Brühvorrichtung mit der Portionskapsel vergleichsweise einfach ist, wobei das Halteelement beim Bewegen des Verschlusselements in Richtung des Anschlusselements zunächst stehen bleibt, so dass sich das Halteelement und das Verschlusselement einander annähern und somit die Portionskapsel in Richtung des Aufnahmeelements ausgerichtet wird. In vorteilhafter Weise wird somit die Ausrichtung der Portionskapsel erzielt, vorzugsweise bevor das Verschlusselement die Portionskapsel in Richtung des Aufnahmeelements verschiebt. Mit anderen Worten: Durch das Antreiben des Verschlusselements und die dadurch erzeugte Relativbewegung zwischen dem Halteelement und dem Verschlusselement wird die Ausrichtung der Portionskapsel erzielt. Anschließend bewegen sich sowohl die Portionskapsel, als auch das Halteelement mit dem Verschlusselement in Richtung des Aufnahmeelements mit.

Gemäß einer bevorzugten Weiterbildung ist vorgesehen, dass in der Ladestellung eine axiale Richtung der Portionskapsel, welche insbesondere senkrecht zu einem Portionskapselboden und/oder einem Portionskapseldeckel der Portionskapsel ausgerichtet ist, gegenüber der Bewegungsrichtung des Verschlusselements einen Neigungswinkel einschließt, wobei nach der Ausrichtung der Portionskapsel der Neigungswinkel verringert und vorzugsweise im Wesentlichen gleich null ist, wobei bevorzugt der Neigungswinkel in der Ladestellung einen Winkel zwischen 5 und 35 Grad, bevorzugt zwischen 15 und 25 Grad und besonders bevorzugt von im Wesentlichen 20 Grad umfasst. In vorteilhafter Weise wird somit ein besonders präzises Einführen der Portionskapsel in den Hohlraum des Aufnahmeelements gewährleistet.

Gemäß einer bevorzugten Weiterbildung ist vorgesehen, dass das Verschlusselement wenigstens eine Perforationsspitze aufweist, welche in Richtung des Aufnahmeelements von dem Verschlusselement absteht, wobei die wenigstens eine Perforationsspitze zum Perforieren der Portionskapsel insbesondere während des Ausrichtens der Portionskapsel vorgesehen ist. In vorteilhafter Weise wird somit die Portionskapsel während des Aufrichtvorgangs automatisch perforiert. Dies ermöglicht optional die Ausbildung des Verschlusselements dahingehend, dass die Perforationsspitze im Gegensatz zum Stand der Technik starr mit dem Verschlusselement verbunden ist, wodurch eine vergleichsweise kostengünstige Herstellung der Brühvorrichtung erzielt wird.

Gemäß einer bevorzugten Weiterbildung ist vorgesehen, dass das Halteelement zwei seitlich am Verschlusselement angeordnete Seitenarme umfasst, welche relativ zum Verschlusselement verschieblich ausgebildet sind, wobei dem Aufnahmeelement zugewandte Endabschnitte der Seitenarme in Richtung des Aufnahmeelements über das Verschlusselement hinausragen und bevorzugt zumindest teilweise L-förmig zueinander gebogen sind und wobei besonders bevorzugt die L-förmigen Endabschnitte zum Hintergreifen eines Flansches der Portionskapsel in der Ladestellung und zum Heranziehen des Flansches in Richtung des Verschlusselements beim Bewegen des Verschlusselements in Richtung des Aufnahmeelements vorgesehen sind.

Gemäß einer bevorzugten Weiterbildung ist vorgesehen, dass die Brühvorrichtung derart ausgebildete Anschläge für die Seitenarme aufweist, dass beim Bewegen des Verschlusselements in Richtung des Aufnahmeelements zumindest kurzzeitig eine Anlage jeweils zwischen den Seitenarmen und den Anschlägen vorgesehen ist und die Endabschnitte der Seitenarme sich relativ zum Verschlusselement zumindest kurzzeitig in Richtung des Verschlusselements bewegen. In vorteilhafter Weise wird durch die derartige Ausbildung der Anschläge in einfacher und vergleichsweise kostengünstig zu implementierender Weise die Ausrichtung der Kapsel und/oder die Perforation der Kapsel erzielt. Der Anschlag bildet für die Seitenarme einen mechanischen Widerstand bei der Bewegung in Richtung des Aufnahmeelements, so dass die Seitenarme bei der Bewegung des Verschlusselements in Richtung Aufnahmeelements in Richtung des Verschlusselements verschoben werden. Erst wenn die Seitenarme maximal in Richtung des Verschlusselements verschoben sind, überwinden die Seitenarme die Anschläge und bewegen sich zusammen mit dem Verschlusselement auch in Richtung des Aufnahmeelements.

Gemäß einer bevorzugten Weiterbildung ist vorgesehen, dass die Seitenarme in seitlichen Führungsbahnen gleitend gelagert sind, wobei die Führungsbahnen sich im Wesentlichen parallel zur Bewegungsrichtung erstrecken und wobei bevorzugt die Anschläge jeweils Stufen oder Verjüngungen in den Führungsbahnen umfassen. In vorteilhafter Weise umfassen die Führungsbahnen ferner eine gekrümmte weitere Führungsbahn, auf welcher die Seitenarme bei der Rückwärtsbewegung des Verschlusselements derart voneinander beabstandet bleiben, dass die Portionskapsel außer Eingriff mit den Seitenarme bleibt und die verbrauchte Portionskapsel nach Beendigung des Extraktionsvorgangs somit beispielsweise unter Einwirkung der Schwerkraft und/oder eines Federelements aus dem Hohlraum des Aufnahmeelements in einen Auffangbehälter fallen kann. Die Führungsbahnen sind insbesondere wie im Stand der Technik ausgebildet. Der Offenbarungsgehalt der Druckschrift EP 2 077 087 A1 wird daher ausdrücklich in die vorliegende Beschreibung miteinbezogen.

Gemäß einer bevorzugten Weiterbildung ist vorgesehen, dass die Reibung zwischen den Seitenarmen und den Führungsbahnen derart groß ist, dass sich die Endabschnitte der Seitenarme beim Bewegen des Verschlusselements in Richtung des Aufnahmeelements relativ zum Verschlusselement zumindest kurzzeitig in Richtung des Verschlusselements bewegen. In vorteilhafter Weise erzeugt die Reibung zwischen den Seitenarmen und der Führungsbahn in der Ladestellung eine der Bewegung des Verschlusselements entgegengesetzte Reibkraft auf die Seitenarme, welche ausreicht, um die Portionskapsel auszurichten und während des Ausrichtvorgangs vorzugsweise zu perforieren.

Gemäß einer bevorzugten Weiterbildung ist vorgesehen, dass die Seitenarme jeweils mittels eines Federelements mit dem Verschlusselement derart gekoppelt sind, dass die Endabschnitte der Seitenarme in Richtung des Verschlusselement vorgespannt sind, wobei die Brühvorrichtung einen derartig ausgebildeten Endanschlag aufweist, dass in der Ladestellung der Endanschlag mit den Seitenarmen in Anlage ist und die Endabschnitte der Seitenarme entgegen einer Federspannung des Federelements in Richtung des Aufnahmeelements verschoben sind und dass bei einer Bewegung des Verschlusselements in Richtung des Aufnahmeelements die Anlage zwischen den Endanschlägen und den Seitenarmen aufgehoben wird und ein Ausrichten der Portionskapsel durch die Federspannung des Federelements erfolgt. In vorteilhafter Weise wird somit in einfacher Weise eine automatische Ausrichtung der Portionskapsel durch eine Entspannung des Federelements erzielt.

Ein weiterer Gegenstand der vorliegenden Erfindung ist ein Verfahren wie in Anspruch 11 definiert, zum Extrahieren einer Portionskapsel mit einer Brühvorrichtung, wobei in einem ersten Verfahrensschritt das Verschlusselement in die Ladestellung bewegt wird, wobei in einem zweiten Verfahrensschritt die Portionskapsel in der Brühvorrichtung angeordnet und von dem Halteelement gehalten wird, wobei in einem dritten Verfahrensschritt das Verschlusselement von der Ladestellung in Richtung des Aufnahmeelements bewegt wird, wobei dabei durch die Bewegung des Verschlusselements die Portionskapsel von dem Halteelement in Richtung des Aufnahmeelements ausgerichtet wird, wobei in einem vierten Verfahrensschritt das Verschlusselement in die Extraktionsstellung bewegt wird und wobei in einem fünften Verfahrensschritt unter Einleitung von Extraktionsflüssigkeit in die Portionskapsel ein Getränk aus der Portionskapsel extrahiert wird. In vorteilhafter Weise ermöglicht das erfindungsgemäße Verfahren, wie oben bereits detailiert ausgeführt wurde, eine Ausrichtung der Portionskapsel im dritten Verfahrensschritt, d.h. insbesondere zeitlich bevor die Portionskapsel in den Hohlraum des Aufnahmeelements eingeführt wird, so dass die im Zusammenhang mit dem Stand der Technik beschriebenen Nachteile vermieden werden.

Gemäß einer bevorzugten Weiterbildung ist vorgesehen, dass durch die Bewegung des Verschlusselements im dritten Verfahrensschritt das Halteelement relativ zum Verschlusselement in Richtung des Verschlusselements bewegt wird, so dass in vorteilhafter Weise die Portionskapsel derart verkippt wird, dass eine dem Verschlusselement zugewandte Seite der Portionskapsel, insbesondere der Portionskapseldeckel, in Anlage mit dem Verschlusselement gebracht wird und somit die dem Verschlusselement abgewandte Seite der Portionskapsel, insbesondere der Portionskapselboden in Richtung des Aufnahmeelements zeigt.

Gemäß einer bevorzugten Weiterbildung ist vorgesehen, dass im dritten Verfahrensschritt die Portionskapsel durch das Ausrichten der Portionskapsel, insbesondere von wenigstens einer mit dem Verschlusselement gekoppelten Perforationsspitze, perforiert wird, so dass in vorteilhafter Weise automatisch die Perforation der dem Verschlusselement zugewandten Seite der Portionskapsel erfolgt. Im Gegensatz zum Stand der Technik wird dabei kein zusätzlicher Verfahrensschritt oder eine zusätzliche Mechanik zur Perforation der Portionskapsel benötigt, welche eine Relativbewegung der Perforationsspitze relativ zum Verschlusselement umfasst.

Gemäß einer bevorzugten Weiterbildung ist vorgesehen, dass im vierten Verfahrensschritt das Aufnahmeelement außer Eingriff mit der Portionskapsel gebracht wird, bevor oder während das Verschlusselement die Extraktionsstellung erreicht, und/oder dass in einem sechsten Verfahrensschritt das Verschlusselement wieder vom Aufnahmeelement entfernt wird, so dass die Portionskapsel unter Einwirkung der Schwerkraft aus dem Aufnahmeelement in einen Auffangbehälter fällt. Einerseits wird folglich eine gute Abdichtung der Brühkammer während des Extraktionsvorgangs und andererseits vorzugsweise ein automatisches Auswerfen der verbrauchten Portionskapsel beim Zurückfahren des Verschlusselements erzielt.

Gemäß einer bevorzugten Weiterbildung ist vorgesehen, dass durch die Bewegung des Verschlusselements im sechsten Verfahrensschritt das Halteelement relativ zum Verschlusselement in Richtung des Aufnahmeelements bewegt wird, wobei vorzugsweise zeitlich nach dem sechsten Verfahrensschritt der erste Verfahrensschritt erneut durchgeführt wird. In vorteilhafter Weise wird die Brühvorrichtung somit wieder in ihre Ausgangslage (Ladestellung) zurückversetzt und für einen neuen Extraktionsvorgang bereitgestellt.

Gemäß einer bevorzugten Weiterbildung ist vorgesehen, dass durch die Bewegung des Verschlusselements im dritten Verfahrensschritt das Halteelement in Form von zwei seitlich am Verschlusselement angebrachten Seitenarmen in Richtung des Verschlusselements bewegt wird, so dass ein Flansch der Portionskapsel von zwei L-förmig ausgebildeten Endabschnitte der Seitenarme in Richtung des Verschlusselements geschwenkt wird. Die Seitenarme werden dabei insbesondere jeweils in seitlich angeordneten Führungsbahnen geführt, wobei die Seitenarme im dritten Verfahrensschritt jeweils gegen einen Anschlag, insbesondere in Form einer Stufe oder einer Verjüngung in den Führungsbahnen, geschoben werden. Vorzugsweise wird dabei die Portionskapsel gleichzeitig perforiert.

Gemäß einer bevorzugten Weiterbildung ist vorgesehen, dass die Seitenarme im dritten Verfahrensschritt durch ein Federelement in Richtung des Verschlusskolbens bewegt werden, wobei bevorzugt das Federelement im ersten Verfahrensschritt in Richtung des Verschlusselements gespannt wird und besonders bevorzugt die Seitenarme im ersten Verfahrensschritt jeweils mit einem Endanschlag in Anlage gebracht werden.

Gemäß einer bevorzugten Weiterbildung ist vorgesehen, dass im vierten Verfahrensschritt die Portionskapsel in das Aufnahmeelement eingeschoben wird, wobei insbesondere die Portionskapsel dabei auf der dem Aufnahmeelement zugewandten Seite von einem im Aufnahmeelement angeordneten Aufstechelement perforiert wird.

Die Erfindung wird nachfolgend anhand von in Zeichnungen dargestellten Ausführungsbeispielen näher erläutert. Die Zeichnungen zeigen lediglich beispielhafte Ausführungsformen der Erfindung, welche den wesentlichen Erfindungsgedanken nicht einschränken.
- **Figur 1a**: zeigt eine schematische Perspektivansicht einer Brühvorrichtung gemäß einer ersten Ausführungsform der vorliegenden Erfindung.
- **Figur 1b**: zeigt eine schematische Perspektivansicht eines Verschlusselements einer Brühvorrichtung gemäß der ersten Ausführungsform der vorliegenden Erfindung.
- **Figuren 2a bis 2c**: zeigen eine schematische Darstellung eines Verfahrens zum Extrahieren einer Brühvorrichtung gemäß einer ersten Ausführungsform der vorliegenden Erfindung.
- **Figuren 3a bis 3c**: zeigen eine schematische Darstellung eines Verfahrens zum Extrahieren einer Brühvorrichtung gemäß einer zweiten Ausführungsform der vorliegenden Erfindung.
- **Figuren 4a bis 4c**: zeigen eine schematische Darstellung eines Verfahrens zum Extrahieren einer Brühvorrichtung gemäß einer dritten Ausführungsform der vorliegenden Erfindung.
- **Figuren 5a bis 5c**: zeigen eine schematische Darstellung eines Verfahrens zum Extrahieren einer Brühvorrichtung gemäß einer vierten Ausführungsform der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

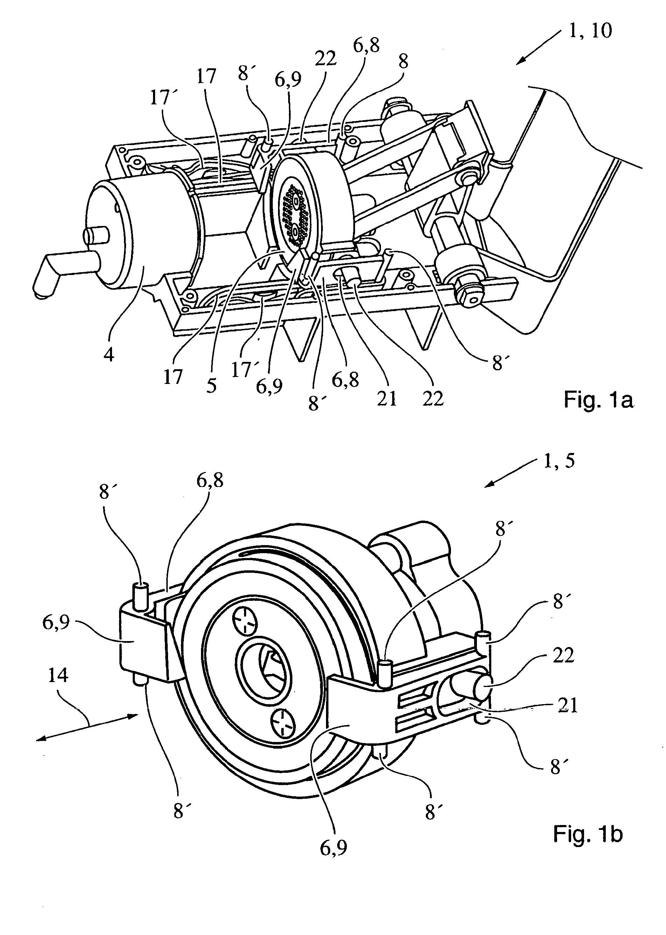

In **Figur 1a** ist eine schematische Perspektivansicht einer Brühvorrichtung 1 gemäß einer ersten Ausführungsform der vorliegenden Erfindung und in **Figur 1b** eine schematische Perspektivansicht eines Verschlusselements 5 einer Brühvorrichtung 1 gemäß der ersten Ausführungsform der vorliegenden Erfindung dargestellt. Die Brühvorrichtung 1 ähnelt dabei im Wesentlichen der in der Druckschrift EP 2 077 087 A1 offenbarten Brühvorrichtung 1 für eine Portionskapsel 2 mit einem automatischen Auswurfmechanismus. Die Brühvorrichtung 1 umfasst dabei ein Aufnahmeelement 4 mit einem Hohlraum 3 zur Aufnahme der in Figuren 1 a und 1 b nicht abgebildeten Portionskapsel 2 und ein Verschlusselement 5 zum Verschließen des Hohlraums 3 zur Schaffung einer geschlossenen Brühkammer. Das Verschlusselement 5 umfasst dabei eine Injektionsanordnung zur Injektion von Extraktionsflüssigkeit in die Portionskapsel 2, während das Aufnahmeelement 4 eine Extraktionsanordnung umfasst, um die mit einer in der Portionskapsel 2 angeordneten Getränkesubstanz wechselwirkende Extraktionsflüssigkeit aus der Portionskapsel 2 abzuführen und zur Bereitstellung eines Getränks einem Gefäß zuzuführen. Zur manuellen (oder alternativ automatischen) Befüllung der Brühvorrichtung 1 mit der Portionskapsel 2 wird das Verschlusselement 5 in eine in Figur 1a illustrierte Ladestellung 10 überführt, in der es von dem Aufnahmeelement 4 beabstandet ist. Anschließend wird die Portionskapsel 2 in den Zwischenraum zwischen dem Aufnahmeelement 4 und dem Verschlusselement 5 eingeführt, wobei die Portionskapsel 2 dabei von zwei seitlich am Verschlusselement 5 angeordneten Seitenarmen 8 aufgenommen wird. Hierbei hintergreifen zwei L-förmig ausgebildete Endabschnitte 9 der Seitenarme 8 beispielsweise einen Flansch 2' der Portionskapsel 2. Anschließend wird das Verschlusselement 5 in Richtung des Aufnahmeelements 4 verschoben und die Portionskapsel 2 in den Hohlraum 3 des Aufnahmeelements 4 eingeführt. Die Seitenarme 8 sind dabei über vorspringende Stifte 8' jeweils in zwei seitlich angeordneten geradlinigen inneren Führungsbahnen 17 derart zwangsgeführt, dass durch die Bewegung des Verschlusselements 5 in Richtung des Aufnahmeelements 4 die L-förmigen Endabschnitte 9 erst kurz bevor die Brühvorrichtung 1 ihre Extraktionsstellung 11 erreicht, d.h. die Portionskapsel 2 nahezu vollständig im Hohlraum 3 des Aufnahmeelements 4 angeordnet ist, auseinanderschwenken und den Flansch 2' der Portionskapsel 2 von den L-förmigen Endabschnitten 9 freigegeben wird. Beim Zurückfahren des Verschlusselements 5 in die Ladestellung 10 werden die Stifte 8' zumindest teilweise in zwei seitlich angeordneten und gebogenen äußeren Führungsbahnen 17' geführt, welche analog zu den inneren Führungsbahnen 17 nach außen versetzt angeordnet sind, so dass die L-förmigen Endabschnitte 9 beim Zurückfahren des Verschlusselements 5 voneinander beabstandet bleiben und sich erst kurz vor dem endgültigen Erreichen der Ladestellung 10 wieder einander annähern. Dies führt dazu, dass beim Zurückfahren des Verschlusselements 5 die verbrauchte Portionskapsel 2 nicht wieder in Eingriff mit den L-förmigen Endabschnitten 9 gelangt und daher unter Einwirkung der Schwerkraft in einen unterhalb der Brühkammer angeordneten nicht abgebildeten Auffangbehälter fällt. Die Seitenarme 8 durchlaufen bei der Hin- und Zurückbewegung des Verschlusselements 5 relativ zum Aufnahmeelement 4 folglich eine Art Hysterese. In Figur 1b ist eine vergrößerte schematische Perspektivansicht des Verschlusselements 5 illustriert. Die Seitenarme 8 weisen jeweils ein Langloch 21 auf, in welches jeweils ein sich senkrecht zur Bewegungsrichtung 14 des Verschlusselements 5 erstreckender Bolzen 22 des Verschlusselements 5 eingreift, so dass die Seitenarme 8 von dem Verschlusselement 5 entlang der Bewegungsrichtung 14 zumindest teilweise mitbewegt werden. Entsprechend der Ausdehnung des Langlochs 21 parallel zur Bewegungsrichtung 14 ist darüberhinaus eine Relativbewegung zwischen dem Verschlusselement 5 und den Seitenarme 8 möglich, so dass in der Ladestellung 10 die Endabschnitte 9 in Richtung des Aufnahmeelements 5 von dem Verschlusselement 4 maximal beabstandet sind, um eine einfache Einführung der Portionskapsel 2 zu ermöglichen, und beim Überführen des Verschlusselements 5 in die Extraktionsstellung 11 die Endabschnitte 9 in Richtung des Verschlusselements 5 verschoben werden. Dies wird beispielsweise dadurch erzielt, dass die die innere Führungsbahn 17 einen als Stufe 16' ausgebildeten Anschlag 16 für die Stifte 8' aufweist, so dass beim Verfahren der Seitenarme 8 in Richtung des Aufnahmeelements 4 ein mechanischer Widerstand zu überwinden ist, oder dass die Reibung zwischen den Stiften 8' und der inneren Führungsbahn 16 entsprechend groß gewählt wird. Im Gegensatz zum Stand der Technik wird dadurch der Flansch 2' der Portionskapsel 2 in Richtung des Verschlusselements 5 verschwenkt und die Portionskapsel 2 bzw. eine dem Aufnahmeelement 4 zugewandte Seite (insbesondere ein Bodenbereich) der Portionskapsel 2 durch das Halteelement 6 in Richtung des Aufnahmeelements 4 ausgerichtet, so dass beim Einführen der Portionskapsel 4 in den Hohlraum 3 des Aufnahmeelements 4 ein Kontakt zwischen dem Rand des Hohlraums 3 und der Portionskapsel 2 verhindert wird.

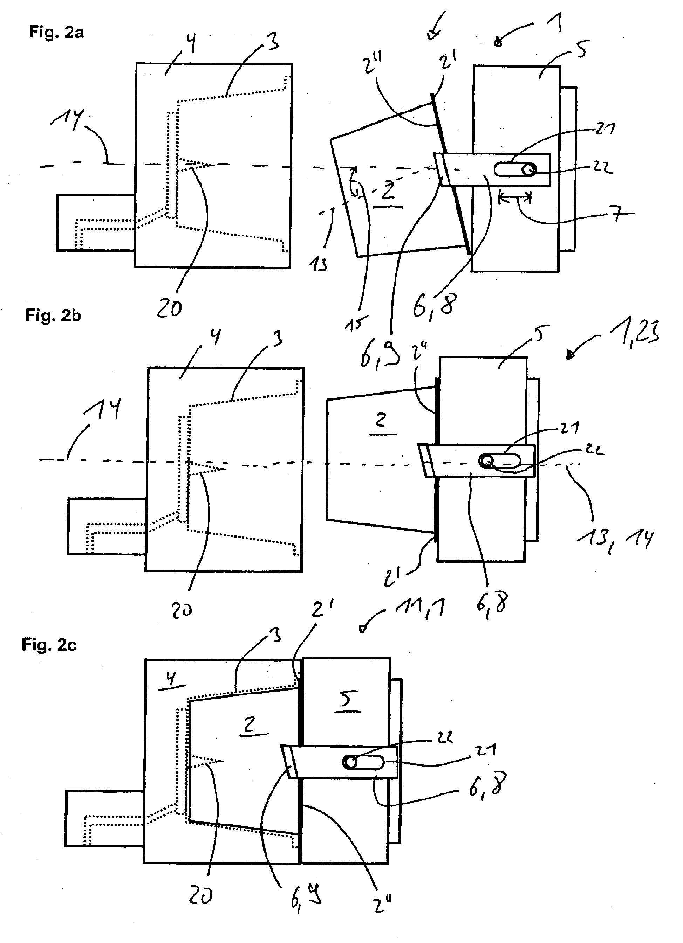

In den **Figuren 2a bis 2c** sind eine schematische Darstellung eines Verfahrens zum Extrahieren einer Brühvorrichtung 1 gemäß einer ersten Ausführungsform der vorliegenden Erfindung dargestellt, wobei die in Figur 1a illustrierte Brühvorrichtung 1 in Figur 2a in der Ladestellung 10, in Figur 2b in einer Zwischenstellung 23 (unmittelbar nach dem Ausrichten der Portionskapsel 2) und in Figur 2c in der Extraktionsstellung 11 schematisch abgebildet ist. In ersten und zweiten Verfahrensschritten illustriert anhand der Figur 2a wird das Verschlusselement 5 in die Ladestellung 10 bewegt und die Portionskapsel 2 in der Brühvorrichtung 1 angeordnet und von dem Halteelement 6 gehalten, wobei die Halteelemente 5 die zwei Seitenarme 8 umfassen und wobei die L-förmigen Endabschnitte 9 der Seitenarme 8 den Flansch 2' der Portionskapsel 2 hintergreifen. Die Portionskapsel 2 ist derart relativ zur Brühvorrichtung 1 ausgerichtet, dass eine axiale Richtung 13 der Portionskapsel 2, welche insbesondere senkrecht zu einem Portionskapseldeckel 2" der Portionskapsel 2 ausgerichtet ist, gegenüber der Bewegungsrichtung 14 des Verschlusselements 5 einen Neigungswinkel 15 einschließt, welcher einen Winkel zwischen 5 und 35 Grad, bevorzugt zwischen 15 und 25 Grad und besonders bevorzugt von im Wesentlichen 20 Grad umfasst. Anhand der in Figur 2b illustrierten Zwischenstellung 23 wird ein dritter Verfahrensschritt dargestellt, wobei das Verschlusselement 5 von der Ladestellung 10 in Richtung des Aufnahmeelements 4 bewegt wird, wobei durch die Bewegung des Verschlusselements 5 die Portionskapsel 2 von dem Halteelement 6 und insbesondere von den L-förmigen Endabschnitten 9 der Seitenarme 8 in Richtung des Aufnahmeelements 4 ausgerichtet wird. Dies wird durch eine Relativbewegung zwischen den Seitenarmen 8 und dem Verschlusselement 5 erzielt, durch welche sich die Endabschnitte 9 in Richtung des Verschlusselements 5 bewegen. Durch die Ausrichtung der Portionskapsel 8 wird der Neigungswinkel 15 verringert und ist anschließend insbesondere im Wesentlichen gleich null. Ein vierter und fünfter Verfahrensschritt werden anhand der Figur 2c illustriert, wobei im vierten Verfahrensschritt das Verschlusselement 5 weiter in die Extraktionsstellung 11 bewegt wird und wobei im einem fünften Verfahrensschritt unter Einleitung von Extraktionsflüssigkeit in die Portionskapsel 2 ein Getränk aus der Portionskapsel 2 extrahiert wird. Die Extraktionsflüssigkeit wird dabei vorzugsweise durch das Verschlusselement 5 der Portionskapsel 2 zugeführt, wobei das Verschlusselement 5 von einer nicht abgebildeten Pumpe und Heizvorrichtung mit der Extraktionsflüssigkeit versorgt wird. Innerhalb des Hohlraums 3 des Aufnahmeelements 4 ist eine Perforationsspitze 20 angeordnet, so dass im vierten Verfahrensschritt automatisch eine Perforation der Portionskapsel 2 auf der dem Aufnahmeelement 4 zugewandten Seite, insbesondere dem Portionskapselboden, erfolgt.

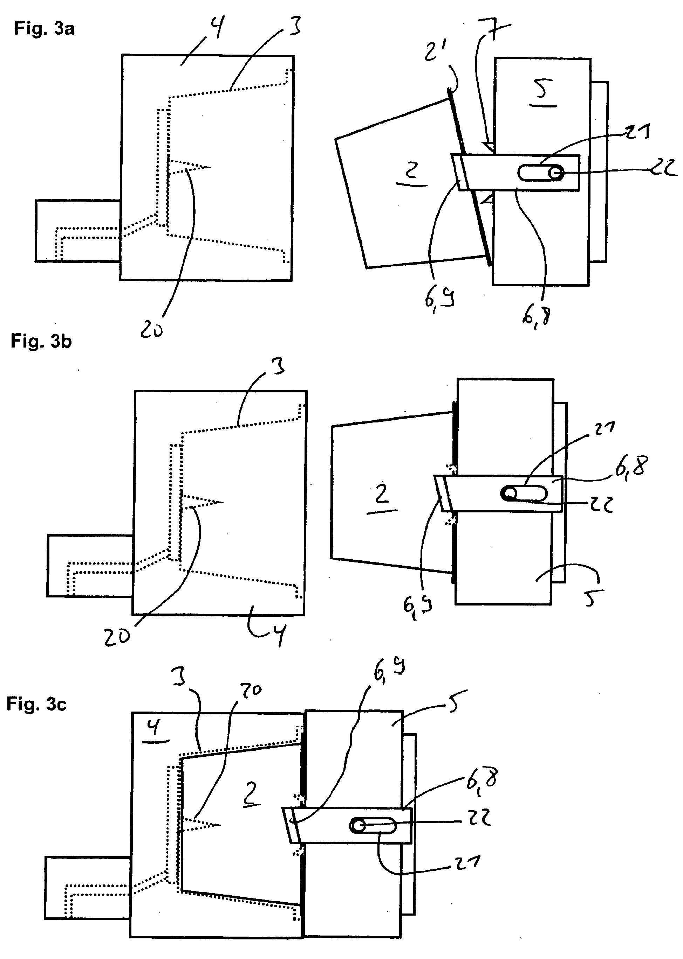

In den **Figuren 3a bis 3c** ist eine schematische Darstellung eines Verfahrens zum Extrahieren einer Brühvorrichtung 1 gemäß einer zweiten Ausführungsform der vorliegenden Erfindung dargestellt, wobei die zweite Ausführungsform im Wesentlichen der in Figuren 2a bis 2c illustrierten ersten Ausführungsform gleicht, wobei das Verschlusselement 5 eine Mehrzahl sich parallel zur Bewegungsrichtung 14 in Richtung des Aufnahmeelements 4 erstreckenden Aufstechelementen 20 aufweist, durch welche während des Ausrichtens der Portionskapsel 2 im dritten Verfahrensschritt eine Perforation der dem Verschlusselement 5 zugewandten Seite der Portionskapsel 2, insbesondere des Portionskapseldeckels 2" erfolgt. In der Extraktionsstellung wird somit ein Einleiten der Extraktionsflüssigkeit in die Portionskapsel 2 durch die von den Aufstechelementen 20 hergestellten Perforationsöffnungen ermöglicht. Die Aufstechelemente 20 sind vorzugsweise starr mit dem Verschlusselement 5 verbunden.

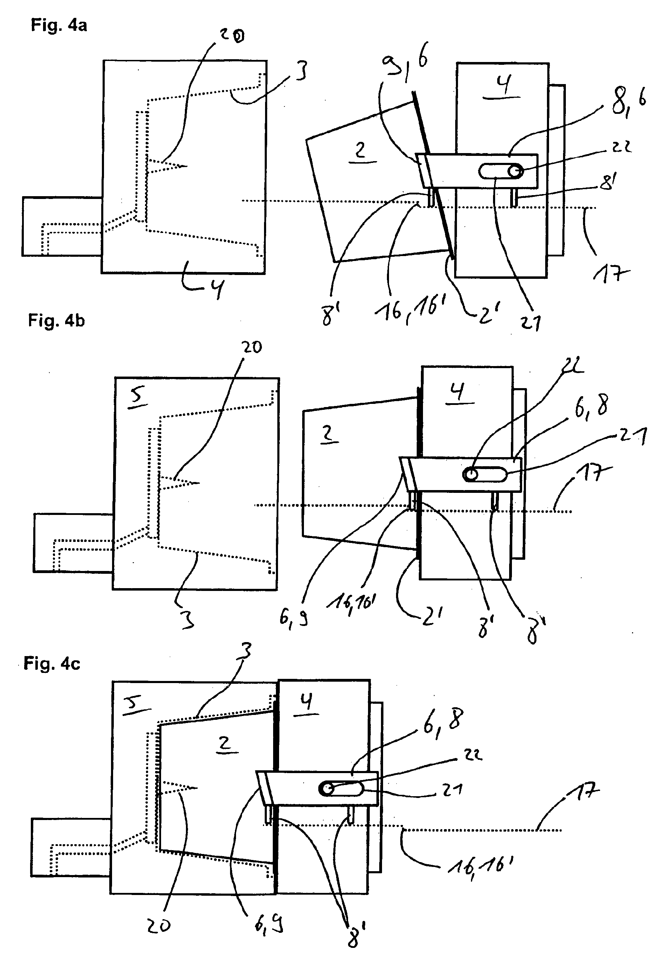

In den **Figuren 4a bis 4c** ist eine schematische Darstellung eines Verfahrens zum Extrahieren einer Brühvorrichtung 1 gemäß einer dritten Ausführungsform der vorliegenden Erfindung dargestellt, wobei die dritte Ausführungsform im Wesentlichen der in Figuren 2a bis 2c illustrierten ersten Ausführungsform gleicht, wobei zusätzlich die inneren Führungsbahnen 17 als Strichlinien schematisch dargestellt sind. Die Seitenarme 8 gleiten mittels den Stiften 8' auf den inneren Führungsbahnen 17. In der dritten Ausführungsform weist die innere Führungsbahn einen als Stufe 16' ausgebildeten Anschlag 16 auf. Beim Bewegen des Verschlusselements 5 in Richtung des Aufnahmeelements 4 im dritten Verfahrensschritt stoßen die Stifte 8' gegen die Stufe 16', so dass eine Relativbewegung der Seitenarme 8 bzw. der Endabschnitte 9 in Richtung des Verschlusselements 5 erzeugt wird und somit die Portionskapsel 2 ausgerichtet wird. Erst anschließend überwinden die Stifte 8' die Stufe 16' und gleiten zusammen mit dem Verschlusselement 4 in Richtung Aufnahmeelement 5.

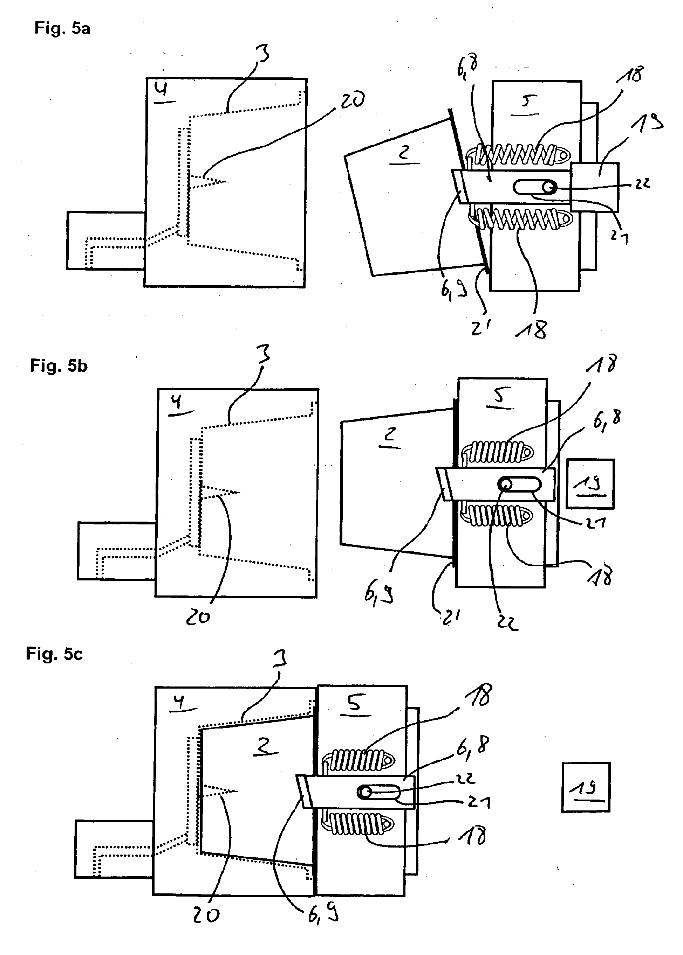

In den **Figuren 5a bis 5c** ist eine schematische Darstellung eines Verfahrens zum Extrahieren einer Brühvorrichtung gemäß einer vierten Ausführungsform der vorliegenden Erfindung, wobei die vierte Ausführungsform im Wesentlichen der in Figuren 2a bis 2c illustrierten ersten Ausführungsform gleicht, wobei die Seitenarme 8 jeweils mittels eines Federelements 18 in Form einer Spiralfeder mit dem Verschlusselement 5 gekoppelt sind. Ferner weist die Brühvorrichtung 1 gemäß der vierten Ausführungsform einen Endanschlag 19 auf, welcher beim Zurückfahren des Verschlusselements 3 von der Extraktionsstellung 11 in die Ladestellung 10 im sechsten Verfahrensschritt ein vollständiges Zurückfahren der Seitenarme 8 verhindert, so dass die Seitenarme 8 sich relativ zum Verschlusselement 5 in Richtung des Aufnahmeelements 4 bewegen und die Federelemente 18 gespannt werden. Beim Bewegen des Verschlusselements 5 in Richtung des Aufnahmeelements 4 im dritten Verfahrensschritt werden die Endanschläge 9 durch diese Federspannung in Richtung des Verschlusselements 5 bewegt und die Portionskapsel 5 wird ausgerichtet und optional perforiert.

## Patentansprüche

1. Brühvorrichtung (1) zum Extrahieren einer Portionskapsel (2) mit einem einen Hohlraum (3) für die Portionskapsel (2) aufweisenden Aufnahmeelement (4) und einem Verschlusselement (5), wobei das Verschlusselement (5) zwischen einer von dem Aufnahmeelement (4) beabstandeten Ladestellung (10) und einer den Hohlraum (3) verschließenden Extraktionsstellung (11) bewegbar ist und wobei die Brühvorrichtung (1) ein Halteelement (6) zur Halterung der Portionskapsel (2) in der Ladestellung (10) aufweist, **dadurch gekennzeichnet, dass** das Halteelement (6) derart ausgebildet ist, dass durch die Bewegung des Verschlusselements (5) von der Ladestellung (10) in die Extraktionsstellung (11) eine Ausrichtung der Portionskapsel (2) im Wesentlichen in Richtung des Aufnahmeelements (4) durch das Halteelement (6) erfolgt.

2. Brühvorrichtung (1) nach Anspruch 1, **dadurch gekennzeichnet, dass** das Halteelement (6) relativ zum Verschlusselement (5) zumindest über eine Teilstrecke (7) bewegbar ausgebildet ist, wobei die Ausrichtung der Portionskapsel (2) durch eine Relativbewegung zwischen dem Halteelement (6) und dem Verschlusselement (5) erfolgt.

3. Brühvorrichtung (1) nach einem der vorhergehenden Ansprüche, **dadurch gekennzeichnet, dass** in der Ladestellung (10) eine axiale Richtung (13) der Portionskapsel (2), welche insbesondere senkrecht zu einem Portionskapselboden und/oder einem Portionskapseldeckel der Portionskapsel (2) ausgerichtet ist, gegenüber der Bewegungsrichtung (14) des Verschlusselements (5) einen Neigungswinkel (15) einschließt, wobei nach der Ausrichtung der Portionskapsel (2) der Neigungswinkel (15) verringert und vorzugsweise im Wesentlichen gleich null ist.

4. Brühvorrichtung (1) nach Anspruch 3, **dadurch gekennzeichnet, dass** der Neigungswinkel (15) in der Ladestellung (10) einen Winkel zwischen 5 und 35 Grad, bevorzugt zwischen 15 und 25 Grad und besonders bevorzugt von im Wesentlichen 20 Grad umfasst.

5. Brühvorrichtung (1) nach einem der vorhergehenden Ansprüche, **dadurch gekennzeichnet, dass** das Verschlusselement (5) wenigstens eine Perforationsspitze (7) aufweist, welche in Richtung des Aufnahmeelements (4) von dem Verschlusselement (5) absteht, wobei die wenigstens eine Perforationsspitze (7) zum Perforieren der Portionskapsel (2) insbesondere während des Ausrichtens der Portionskapsel (2) vorgesehen ist.

6. Brühvorrichtung (1) nach einem der vorhergehenden Ansprüche, **dadurch gekennzeichnet, dass** das Halteelement (6) zwei seitlich am Verschlusselement (5) angeordnete Seitenarme (8) umfasst, welche relativ zum Verschlusselement (5) verschieblich ausgebildet sind, wobei dem Aufnahmeelement (4) zugewandte Endabschnitte (9) der Seitenarme (8) in Richtung des Aufnahmeelements (4) über das Verschlusselement (5) hinausragen und bevorzugt zumindest teilweise L-förmig zueinander gebogen sind und wobei besonders bevorzugt die L-förmigen Endabschnitte (9) zum Hintergreifen eines Flansches (2') der Portionskapsel (2) in der Ladestellung (10) und zum Heranziehen des Flansches (2') in Richtung des Verschlusselements (5) beim Bewegen des Verschlusselements (5) in Richtung des Aufnahmeelements (4) vorgesehen sind.

7. Brühvorrichtung (1) nach Anspruch 6, **dadurch gekennzeichnet, dass** die Brühvorrichtung derart ausgebildete Anschläge (16) für die Seitenarme (8) aufweist, dass beim Bewegen des Verschlusselements (5) in Richtung des Aufnahmeelements (4) zumindest kurzzeitig eine Anlage jeweils zwischen den Seitenarmen (8) und den Anschlägen (16) vorgesehen ist und die Endabschnitte (9) der Seitenarme (8) sich relativ zum Verschlusselement (5) zumindest kurzzeitig in Richtung des Verschlusselements (6) bewegen.

8. Brühvorrichtung (1) nach Anspruch 7, **dadurch gekennzeichnet, dass** die Seitenarme (8) in seitlichen Führungsbahnen (17) gleitend gelagert sind, wobei die Führungsbahnen (17) sich im Wesentlichen parallel zur Bewegungsrichtung (14) erstrecken und wobei bevorzugt die Anschläge (16) jeweils Stufen (16') oder Verjüngungen in den Führungsbahnen (17) umfassen.

9. Brühvorrichtung (1) nach Anspruch 8, **dadurch gekennzeichnet, dass** die Reibung zwischen den Seitenarmen (8) und den Führungsbahnen (17) derart groß ist, dass sich die Endabschnitte (9) der Seitenarme (8) beim Bewegen des Verschlusselements (5) in Richtung des Aufnahmeelements (4) relativ zum Verschlusselement (5) zumindest kurzzeitig in Richtung des Verschlusselements (5) bewegen.

10. Brühvorrichtung (1) nach einem der Ansprüche 6 bis 9, **dadurch gekennzeichnet, dass** die Seitenarme (8) jeweils mittels eines Federelements (18) mit dem Verschlusselement (5) derart gekoppelt sind, dass die Endabschnitte (9) der Seitenarme (8) in Richtung des Verschlusselement (5) vorgespannt sind, wobei die Brühvorrichtung (1) einen derartig ausgebildeten Endanschlag (19) aufweist, dass in der Ladestellung (10) der Endanschlag (19) mit den Seitenarmen (8) in Anlage ist und die Endabschnitte (9) der Seitenarme (8) entgegen einer Federspannung des Federelements (18) in Richtung des Aufnahmeelements (4) verschoben sind und dass bei einer Bewegung des Verschlusselements (5) in Richtung des Aufnahmeelements (4) die Anlage zwischen den Endanschlägen (19) und den Seitenarmen (8) aufgehoben wird und ein Ausrichten der Portionskapsel (2) durch die Federspannung des Federelements (18) erfolgt.

11. Verfahren zum Extrahieren einer Portionskapsel (2) mit einer Brühvorrichtung (1) gemäß einem der vorhergehenden Ansprüchen oder nach dem Oberbegriff des Anspruchs 1, **dadurch gekennzeichnet, dass** in einem ersten Verfahrensschritt das Verschlusselement (5) in die Ladestellung (10) bewegt wird, dass in einem zweiten Verfahrensschritt die Portionskapsel (2) in der Brühvorrichtung (1) angeordnet und von dem Halteelement (6) gehalten wird, dass in einem dritten Verfahrensschritt das Verschlusselement (5) von der Ladestellung (10) in Richtung des Aufnahmeelements (4) bewegt wird, wobei durch die Bewegung des Verschlusselements (5) die Portionskapsel (2) von dem Halteelement (6) in Richtung des Aufnahmeelements (4) ausgerichtet wird, dass in einem vierten Verfahrensschritt das Verschlusselement (5) in die Extraktionsstellung (11) bewegt wird und dass in einem fünften Verfahrensschritt unter Einleitung von Extraktionsflüssigkeit in die Portionskapsel (2) ein Getränk aus der Portionskapsel (2) extrahiert wird.

12. Verfahren nach Anspruch 11, **dadurch gekennzeichnet, dass** durch die Bewegung des Verschlusselements (5) im dritten Verfahrensschritt das Halteelement (6) relativ zum Verschlusselement (5) in Richtung des Verschlusselements (5) bewegt wird.

13. Verfahren nach einem der Ansprüche 11 oder 12, **dadurch gekennzeichnet, dass** im dritten Verfahrensschritt die Portionskapsel (2) durch das Ausrichten der Portionskapsel (2), insbesondere von wenigstens einer mit dem Verschlusselement (5) gekoppelten Perforationsspitze (7), perforiert wird.

14. Verfahren nach einem der Ansprüche 11 bis 13, **dadurch gekennzeichnet, dass** im vierten Verfahrensschritt das Aufnahmeelement (4) außer Eingriff mit der Portionskapsel (2) gebracht wird, bevor oder während das Verschlusselement (5) die Extraktionsstellung (11) erreicht.

15. Verfahren nach einem der Ansprüche 11 bis 14, **dadurch gekennzeichnet, dass** in einem sechsten Verfahrensschritt das Verschlusselement (5) wieder vom Aufnahmeelement (4) entfernt wird, so dass die Portionskapsel (2) unter Einwirkung der Schwerkraft aus dem Aufnahmeelement (4) in einen Auffangbehälter fällt.

16. Verfahren nach einem der Ansprüche 11 bis 15, **dadurch gekennzeichnet, dass** durch die Bewegung des Verschlusselements (5) im sechsten Verfahrensschritt das Halteelement (6) relativ zum Verschlusselement (5) in Richtung des Aufnahmeelements (4) bewegt wird, wobei vorzugsweise zeitlich nach dem sechsten Verfahrensschritt der erste Verfahrensschritt erneut durchgeführt wird.

17. Verfahren nach einem der Ansprüche 11 bis 16, **dadurch gekennzeichnet, dass** durch die Bewegung des Verschlusselements (5) im dritten Verfahrensschritt das Halteelement (6) in Form von zwei seitlich am Verschlusselement (5) angebrachten Seitenarmen (8) in Richtung des Verschlusselements (5) bewegt wird, so dass ein Flansch (2') der Portionskapsel (2) von zwei L-förmig ausgebildeten Endabschnitte (9) der Seitenarme (8) in Richtung des Verschlusselements (5) geschwenkt wird.

18. Verfahren nach Anspruch 17, **dadurch gekennzeichnet, dass** die Seitenarme (8) jeweils in seitlich angeordneten Führungsbahnen (16) geführt werden, wobei die Seitenarme (8) im dritten Verfahrensschritt jeweils gegen einen Anschlag (16), insbesondere in Form einer Stufe (16') oder einer Verjüngung in den Führungsbahnen (16), geschoben werden.

19. Verfahren nach einem der Ansprüche 17 oder 18, **dadurch gekennzeichnet, dass** die Seitenarme (8) im dritten Verfahrensschritt durch ein Federelement (18) in Richtung des Verschlusskolbens (5) bewegt werden.

20. Verfahren nach Anspruch 19, **dadurch gekennzeichnet, dass** das Federelement (18) im ersten Verfahrensschritt in Richtung des Verschlusselements (5) gespannt wird, wobei vorzugsweise die Seitenarme (8) im ersten Verfahrensschritt jeweils mit einem Endanschlag (19) in Anlage gebracht werden.

21. Verfahren nach einem der Ansprüche 11 bis 20, **dadurch gekennzeichnet, dass** im vierten Verfahrensschritt die Portionskapsel (2) in das Aufnahmeelement (4) eingeschoben wird, wobei insbesondere die Portionskapsel (2) dabei auf der dem Aufnahmeelement (4) zugewandten Seite von einem im Aufnahmeelement (4) angeordneten Aufstechelement (20) perforiert wird.

## Claims

1. Brewing apparatus (1) for extracting a beverage from a portion capsule (2), having an accommodating element (4) with a cavity (3) for the portion capsule (2), and having a closure element (5), wherein the closure element (5) can be moved between a loading position (10), in which it is spaced apart from the accommodating element (4), and an extraction position (11), in which it closes the cavity (3), and wherein the brewing apparatus (1) has a retaining element (6) for retaining the portion capsule (2) in the loading position (10), **characterized in that** the retaining element (6) is designed such that movement of the closure element (5) from the loading position (10) into the extraction position (11) causes the portion capsule (2) to be placed in position essentially in the direction of the accommodating element (4) by the retaining element (6).

2. Brewing apparatus (1) according to Claim 1, **characterized in that** the retaining element (6) is designed such that it can be moved relative to the closure element (5) at least over a distance (7), wherein the portion capsule (2) is placed in position by a relative movement between the retaining element (6) and the closure element (5).

3. Brewing apparatus (1) according to one of the preceding claims, **characterized in that**, in the loading position (10), an axial direction (13) of the portion capsule (2), which is placed in position in particular perpendicularly to a base and/or a cover of the portion capsule (2), encloses an angle of inclination (15) in relation to the movement direction (14) of the closure element (5), wherein, once the portion capsule (2) has been placed in position, the angle of inclination (15) is reduced and is preferably essentially equal to zero.

4. Brewing apparatus (1) according to Claim 3, **characterized in that** the angle of inclination (15) in the loading position (10) comprises an angle between 5 and 35 degrees, preferably between 15 and 25 degrees and particularly preferably of essentially 20 degrees.

5. Brewing apparatus (1) according to one of the preceding claims, **characterized in that** the closure element (5) has at least one perforation spike (7), which projects from the closure element (5) in the direction of the accommodating element (4), wherein the at least one perforation spike (7) is provided for perforating the portion capsule (2) in particular as the portion capsule (2) is being placed in position.

6. Brewing apparatus (1) according to one of the preceding claims, **characterized in that** the retaining element (6) comprises two side arms (8), which are arranged laterally in the closure element (5) and are designed such that they can be displaced relative to the closure element (5), wherein end portions (9) of the side arms (8), said end portions being directed towards the accommodating element (4), project in the direction of the accommodating element (4), beyond the closure element (5), and are curved preferably at least partially in an L-shaped manner in relation to one another, and wherein particularly preferably the L-shaped end portions (9) are provided for engaging behind a flange (2') of the portion capsule (2) in the loading position (10) and for pulling the flange (2') in the direction of the closure element (5) when the closure element (5) is being moved in the direction of the accommodating element (4).

7. Brewing apparatus (1) according to Claim 6, **characterized in that** the brewing apparatus has stops (16) which are intended for the side arms (8) and are designed such that, when the closure element (5) is being moved in the direction of the accommodating element (4), abutment is provided, at least briefly, in each case between the side arms (8) and the stops (16) and the end portions (9) of the side arms (8) move relative to the closure element (5), at least briefly, in the direction of the closure element (6).

8. Brewing apparatus (1) according to Claim 7, **characterized in that** the side arms (8) are mounted for sliding action in lateral guide tracks (17), wherein the guide tracks (17) extend essentially parallel to the movement direction (14), and wherein preferably the stops (16) each comprise steps (16') or tapered portions in the guide tracks (17).

9. Brewing apparatus (1) according to Claim 8, **characterized in that** the friction between the side arms (8) and the guide tracks (17) is of such a magnitude that, as the closure element (5) is being moved in the direction of the accommodating element (4), the end portions (9) of the side arms (8) move relative to the closure element (5), at least briefly, in the direction of the closure element (5).

10. Brewing apparatus (1) according to one of Claims 6 to 9, **characterized in that** the side arms (8) are coupled to the closure element (5) in each case by means of a spring element (18) such that the end portions (9) of the side arms (8) are prestressed in the direction of the closure element (5), wherein the brewing apparatus (1) has an end stop (19) which is designed such that, in the loading position (10), the end stop (19) is in abutment with the side arms (8) and the end portions (9) of the side arms (8) are displaced in the direction of the accommodating element (4) counter to spring stressing of the spring element (18), and that, when the closure element (5) is being moved in the direction of the accommodating element (4), the abutment between the end stops (19) and the side arms (8) is eliminated and the portion capsule (2) is placed in position by the spring stressing of the spring element (18).

11. Method of extracting a beverage from a portion capsule (2) using a brewing apparatus (1) according to one of the preceding claims or according to the preamble of Claim 1, **characterized in that**, in a first method step, the closure element (5) is moved into the loading position (10), **in that**, in a second method step, the portion capsule (2) is arranged in the brewing apparatus (1) and retained by the retaining element (6), **in that**, in a third method step, the closure element (5) is moved from the loading position (10) in the direction of the accommodating element (4), wherein movement of the closure element (5) causes the portion capsule (2) to be placed in position in the direction of the accommodating element (4) by the retaining element (6), **in that**, in a fourth method step, the closure element (5) is moved into the extraction position (11), and **in that**, in a fifth method step, with extraction liquid being introduced into the portion capsule (2), a beverage is extracted from the portion capsule (2).

12. Method according to Claim 11, **characterized in that** movement of the closure element (5) in the third method step causes the retaining element (6) to be moved relative to the closure element (5), in the direction of the closure element (5).

13. Method according to either of Claims 11 and 12, **characterized in that**, in the third method step, the portion capsule (2) is perforated as in particular by at least one perforation spike (7) coupled to the closure element (5), a result of the portion capsule (2) being placed in position.

14. Method according to one of Claims 11 to 13, **characterized in that**, in the fourth method step, the accommodating element (4) is disengaged from the portion capsule (2) before the closure element (5) reaches the extraction position (11) or as it is reaching the same.

15. Method according to one of Claims 11 to 14, **characterized in that**, in a sixth method step, the closure element (5) is moved away from the accommodating element (4) again, and therefore the portion capsule (2), under the action of gravitational force, drops out of the accommodating element (4) into a collecting container.

16. Method according to one of Claims 11 to 15, **characterized in that** the movement of the closure element (5) in the sixth method step causes the retaining element (6) to be moved relative to the closure element (5), in the direction of the accommodating element (4), wherein the first method step is carried out anew preferably after the sixth method step has taken place.

17. Method according to one of Claims 11 to 16, **characterized in that** the movement of the closure element (5) in the third method step causes the retaining element (6), in the form of two side arms (8) fitted laterally in the closure element (5), to be moved in the direction of the closure element (5), and therefore a flange (2') of the portion capsule (2) is pivoted in the direction of the closure element (5) by two L-shaped end portions (9) of the side arms (8).

18. Method according to Claim 17, **characterized in that** the side arms (8) are each guided in laterally arranged guide tracks (16), wherein the side arms (8), in the third method step, are each pushed against a stop (16), in particular in the form of a step (16') or a tapered portion in the guide tracks (16).

19. Method according to either of Claims 17 and 18, **characterized in that** the side arms (8), in the third method step, are moved in the direction of the closure piston (5) by a spring element (18).

20. Method according to Claim 19, **characterized in that** the spring element (18), in the first method step, is subjected to stressing in the direction of the closure element (5), wherein preferably the side arms (8), in the first method step, are each brought into abutment with an end stop (19).

21. Method according to one of Claims 11 to 20, **characterized in that**, in the fourth method step, the portion capsule (2) is pushed into the accommodating element (4), wherein in particular the portion capsule (2) here is perforated, on the side which is directed towards the accommodating element (4), by a piercing element (20) arranged in the accommodating element (4).

## Revendications

1. Dispositif de percolation (1) pour l'extraction d'une capsule monodose (2) comprenant un élément de réception (4) présentant une cavité (3) pour la capsule monodose (2) et un élément de fermeture (5), l'élément de fermeture (5) pouvant être déplacé entre une position de chargement (10) espacée de l'élément de réception (4) et une position d'extraction (11) fermant la cavité (3) et le dispositif de percolation (1) présentant un élément de retenue (6) pour retenir la capsule monodose (2) dans la position de chargement (10), **caractérisé en ce que** l'élément de retenue (6) est réalisé de telle sorte que par le déplacement de l'élément de fermeture (5) de la position de chargement (10) dans la position d'extraction (11), il se produise une orientation de la capsule monodose (2) essentiellement dans la direction de l'élément de réception (4) par l'élément de retenue (6).

2. Dispositif de percolation (1) selon la revendication 1, **caractérisé en ce que** l'élément de retenue (6) est réalisé de manière à pouvoir être déplacé par rapport à l'élément de fermeture (5) au moins sur une distance partielle (7), l'orientation de la capsule monodose (2) s'effectuant par un mouvement relatif entre l'élément de retenue (6) et l'élément de fermeture (5).

3. Dispositif de percolation (1) selon l'une quelconque des revendications précédentes, **caractérisé en ce que** dans la position de chargement (10), une direction axiale (13) de la capsule monodose (2), qui est orientée notamment perpendiculairement par rapport à un fond de capsule monodose et/ou un couvercle de capsule monodose de la capsule monodose (2), forme, par rapport à la direction de déplacement (14) de l'élément de fermeture (5), un angle d'inclinaison (15), l'angle d'inclinaison (15) diminuant et de préférence étant essentiellement égal à zéro après l'orientation de la capsule monodose (2).

4. Dispositif de percolation (1) selon la revendication 3, **caractérisé en ce que** l'angle d'inclinaison (15), dans la position de chargement (10), est un angle compris entre 5 et 35 degrés, de préférence entre 15 et 25 degrés et particulièrement préférablement d'essentiellement 20 degrés.

5. Dispositif de percolation (1) selon l'une quelconque des revendications précédentes, **caractérisé en ce que** l'élément de fermeture (5) présente au moins une pointe de perforation (7) qui fait saillie dans la direction de l'élément de réception (4) depuis l'élément de fermeture (5), l'au moins une pointe de perforation (7) étant prévue pour perforer la capsule monodose (2) en particulier pendant l'orientation de la capsule monodose (2).

6. Dispositif de percolation (1) selon l'une quelconque des revendications précédentes, **caractérisé en ce que** l'élément de retenue (6) comprend deux bras latéraux (8) disposés latéralement au niveau de l'élément de fermeture (5), lesquels sont réalisés de manière déplaçable par rapport à l'élément de fermeture (5), des portions d'extrémité (9) des bras latéraux (8) tournées vers l'élément de réception (4) faisant saillie dans la direction de l'élément de réception (4) au-delà de l'élément de fermeture (5) et de préférence étant cintrées l'une par rapport à l'autre au moins en partie en forme de L et particulièrement préférablement les portions d'extrémité en forme de L (9) étant prévues pour venir en prise par l'arrière avec une bride (2') de la capsule monodose (2) dans la position de chargement (10) et pour rapprocher la bride (2') dans la direction de l'élément de fermeture (5) lors du déplacement de l'élément de fermeture (5) dans la direction de l'élément de réception (4).

7. Dispositif de percolation (1) selon la revendication 6, **caractérisé en ce que** le dispositif de percolation présente des butées (16) pour les bras latéraux (8), réalisées de telle sorte que lors du déplacement de l'élément de fermeture (5) dans la direction de l'élément de réception (4), un appui au moins bref soit prévu à chaque fois entre les bras latéraux (8) et les butées (16), et que les portions d'extrémité (9) des bras latéraux (8) se déplacent par rapport à l'élément de fermeture (5) au moins brièvement dans la direction de l'élément de fermeture (6).

8. Dispositif de percolation (1) selon la revendication 7, **caractérisé en ce que** les bras latéraux (8) sont montés de manière coulissante dans des pistes de guidage latérales (17), les pistes de guidage (17) s'étendant essentiellement parallèlement à la direction de déplacement (14) et de préférence les butées (16) comprenant à chaque fois des épaulements (16') ou des rétrécissements dans les pistes de guidage (17).

9. Dispositif de percolation (1) selon la revendication 8, **caractérisé en ce que** le frottement entre les bras latéraux (8) et les pistes de guidage (17) est suffisamment important pour que les portions d'extrémité (9) des bras latéraux (8), lors du déplacement de l'élément de fermeture (5) dans la direction de l'élément de réception (4), se déplacent par rapport à l'élément de fermeture (5) au moins brièvement dans la direction de l'élément de fermeture (5).

10. Dispositif de percolation (1) selon l'une quelconque des revendications 6 à 9, **caractérisé en ce que** les bras latéraux (8) sont à chaque fois accouplés au moyen d'un élément de ressort (18) à l'élément de fermeture (5) de telle sorte que les portions d'extrémité (9) des bras latéraux (8) soient précontraintes dans la direction de l'élément de fermeture (5), le dispositif de percolation (1) présentant une butée de fin de course (19) réalisée de telle sorte que dans la position de chargement (10), la butée de fin de course (19) soit appliquée contre les bras latéraux (8) et que les portions d'extrémité (9) des bras latéraux (8) soient déplacées à l'encontre d'une contrainte de ressort de l'élément de ressort (18) dans la direction de l'élément de réception (4) et que dans le cas d'un déplacement de l'élément de fermeture (5) dans la direction de l'élément de réception (4), l'appui entre les butées de fin de course (19) et les bras latéraux (8) soit supprimé et qu'il se produise une orientation de la capsule monodose (2) par la contrainte de ressort de l'élément de ressort (18).

11. Procédé pour extraire une capsule monodose (2) avec un dispositif de percolation (1) selon l'une quelconque des revendications précédentes ou selon le préambule de la revendication 1, **caractérisé en ce que** dans une première étape de procédé, l'élément de fermeture (5) est déplacé dans la position de chargement (10), dans une deuxième étape de procédé, la capsule monodose (2) est disposée dans le dispositif de percolation (1) et est retenue par l'élément de retenue (6), dans une troisième étape de procédé, l'élément de fermeture (5) est déplacé de la position de chargement (10) dans la direction de l'élément de réception (4), la capsule monodose (2) étant orientée, du fait du déplacement de l'élément de fermeture (5), par l'élément de retenue (6) dans la direction de l'élément de réception (4), **en ce que** dans une quatrième étape de procédé, l'élément de fermeture (5) est déplacé dans la position d'extraction (11) et dans une cinquième étape de procédé, en introduisant du liquide d'extraction dans la capsule monodose (2), une boisson est extraite de la capsule monodose (2).

12. Procédé selon la revendication 11, **caractérisé en ce que** du fait du déplacement de l'élément de fermeture (5) dans la troisième étape de procédé, l'élément de retenue (6) est déplacé par rapport à l'élément de fermeture (5) dans la direction de l'élément de fermeture (5).

13. Procédé selon l'une quelconque des revendications 11 ou 12, **caractérisé en ce que** dans la troisième étape de procédé, la capsule monodose (2) est perforée par l'orientation de la capsule monodose (2), en particulier par au moins une pointe de perforation (7) accouplée à l'élément de fermeture (5).

14. Procédé selon l'une quelconque des revendications 11 à 13, **caractérisé en ce que** dans la quatrième étape de procédé, l'élément de réception (4) est amené hors d'engagement avec la capsule monodose (2), avant ou alors que l'élément de fermeture (5) n'atteigne ou atteint la position d'extraction (11).

15. Procédé selon l'une quelconque des revendications 11 à 14, **caractérisé en ce que** dans une sixième étape de procédé, l'élément de fermeture (5) est à nouveau éloigné de l'élément de réception (4), de telle sorte que la capsule monodose (2) tombe hors de l'élément de réception (4) dans un récipient de collecte sous l'effet de la force de gravité.

16. Procédé selon l'une quelconque des revendications 11 à 15, **caractérisé en ce que** par le déplacement de l'élément de fermeture (5) dans la sixième étape de procédé, l'élément de retenue (6) est déplacé par rapport à l'élément de fermeture (5) dans la direction de l'élément de réception (4), la première étape de procédé étant de préférence réalisée à nouveau après la sixième étape de procédé.

17. Procédé selon l'une quelconque des revendications 11 à 16, **caractérisé en ce que** par le déplacement de l'élément de fermeture (5) dans la troisième étape de procédé, l'élément de retenue (6) est déplacé dans la direction de l'élément de fermeture (5) sous forme de deux bras latéraux (8) montés latéralement sur l'élément de fermeture (5), de telle sorte qu'une bride (2') de la capsule monodose (2) soit pivotée dans la direction de l'élément de fermeture (5) par deux portions d'extrémité (9) réalisées en forme de L des bras latéraux (8).

18. Procédé selon la revendication 17, **caractérisé en ce que** les bras latéraux (8) sont à chaque fois guidés dans des pistes de guidage disposées latéralement (16), les bras latéraux (8), dans la troisième étape de procédé, étant à chaque fois poussés contre une butée (16), notamment sous la forme d'un épaulement (16') ou d'un rétrécissement dans les pistes de guidage (16).

19. Procédé selon l'une quelconque des revendications 17 ou 18, **caractérisé en ce que** les bras latéraux (8), dans la troisième étape de procédé, sont déplacés par un élément de ressort (18) dans la direction de l'élément de fermeture (5).

20. Procédé selon la revendication 19, **caractérisé en ce que** l'élément de ressort (18) est contraint dans la première étape de procédé dans la direction de l'élément de fermeture (5), les bras latéraux (8) étant de préférence amenés dans la première étape de procédé à chaque fois en appui contre une butée de fin de course (19).

21. Procédé selon l'une quelconque des revendications 11 à 20, **caractérisé en ce que** dans la quatrième étape de procédé, la capsule monodose (2) est enfoncée dans l'élément de réception (4), la capsule monodose (2) étant notamment en l'occurrence perforée du côté tourné vers l'élément de réception (4) par un élément de perçage (20) disposé dans l'élément de réception (4).
